# FASCICULE DE BREVET EUROPEEN

(11) **EP 2 608 508 B1**
(45) Date de publication et mention de la délivrance du brevet: **25.03.2020**
(21) Numéro de dépôt: 12198008.0
(22) Date de dépôt: 19.12.2012
(51) Int. Cl.: H04M 7/00, H04M 7/12, H04M 3/493, H04M 3/51

(54) **Procédé de communication multimodale**
Multimode-Kommunikationsverfahren
Multimodal communication method

(30) Priorité: 19.12.2011 FR 1161951
(43) Date de publication de la demande: 26.06.2013
(73) Titulaire: Orange, 75015 Paris (FR)
(72) Inventeur: Marrec, Sylvain, 22700 Louannec (FR)
(74) Mandataire: Regimbeau

(56) Documents cités:
- US-A- 6 144 667
- US-A1- 2011 158 222

## Description

L'invention concerne le domaine des services dans un réseau de télécommunications, et plus particulièrement un service multimodal déclenché à partir d'un numéro d'appel téléphonique. Elle vise un procédé de communication, un terminal, un serveur, un système de télécommunications et un programme d'ordinateur.

Il est connu d'utiliser dans les réseaux de télécommunications un service vocal mis en œuvre par un Serveur Vocal Interactif (SVI). Afin de déclencher un tel service, un utilisateur du réseau de télécommunications compose sur son terminal le numéro d'appel du Serveur Vocal Interactif afin d'établir un lien de communication de voix. Une fois ce lien établi, le service déroule un script vocal en fonction des choix effectués par l'utilisateur au cours de la communication. Ces choix peuvent être effectués vocalement ou par l'envoi de signaux Dual-Tone Multi-Frequency (DTMF) à l'aide des touches du terminal.

Il est par ailleurs connu d'utiliser, dans un réseau de télécommunications, un service de données pour envoyer ou recevoir des données, depuis un terminal du réseau, sur un lien de communication de données, respectivement de ou vers un serveur du réseau de télécommunications hébergeant, par exemple, un site Web.

Par ailleurs, la demande de brevet US2010/0159902 décrit un service dans lequel un utilisateur compose sur son terminal mobile un numéro d'appel vers un terminal d'un service de relation client afin d'effectuer une demande de support. Ce numéro d'appel est intercepté par un serveur qui déclenche alors l'activation d'une communication avec le terminal de l'utilisateur sur un lien de communication de données. Une fois la communication établie, le serveur envoie au terminal des données autorisant l'affichage, sur l'écran du terminal, d'instructions permettant à l'utilisateur de traiter sa demande.

Selon le document US 6 144 667, un internaute souhaite contacter téléphoniquement un service d'assistance associé à un site Internet qu'il visite. L'internaute clique pour ce faire sur une icône de requête d'établissement d'appel téléphonique. Il peut être amené à composer sur la page web le numéro d'appel du service d'assistance. Le serveur hébergeant le site Internet visité contacte alors une passerelle et lui fait passer le numéro de téléphone de l'internaute et celui du service d'assistance. La passerelle établit alors un lien de communication de voix entre le téléphone de l'internaute et le téléphone du service d'assistance.

Une telle solution nécessite cependant l'utilisation d'un serveur d'interception, ce qui présente un inconvénient puisque cela complexifie l'architecture du réseau. En outre, une telle solution ne permet pas l'utilisation d'un service vocal interactif, puisque la communication sur le lien de communication de voix est interrompue au profit de la communication sur le lien de communication de données.

L'invention a pour but de résoudre au moins en partie ces inconvénients en proposant une solution de service multimodal déclenché à partir d'un numéro d'appel permettant l'utilisation simultanée d'un service vocal, sur un lien de communication de voix, et d'un service de données, sur un lien de communication de données.

A cet effet, selon l'invention, le procédé de communication de la revendication 1 sur une pluralité de liens de communication dans un réseau de télécommunications, à partir d'un numéro d'appel, est innovant en ce qu'il comprend, pour au moins un premier terminal, les étapes de :
- interception d'un numéro d'appel, vers un serveur vocal, composé depuis le premier terminal,
- obtention d'une adresse de connexion à un serveur de données du réseau de télécommunications, ladite adresse de connexion étant associée au numéro d'appel composé, et,
- activation automatique d'un lien de communication de voix entre le premier terminal et le serveur vocal à partir du numéro d'appel composé et d'un lien de communication de données entre un second terminal et le serveur de données à partir de l'adresse de connexion obtenue de sorte à pouvoir communiquer simultanément sur lesdits liens.

Par le terme « activation », on entend l'établissement direct ou indirect d'un lien de communication. Lorsque le premier terminal et le second terminal sont confondus en un même terminal unique, l'étape d'activation correspond à l'établissement direct, par le terminal, d'une part, d'un lien de communication de voix avec le serveur vocal et, d'autre part, d'un lien de communication de données avec le serveur de données. Lorsque le premier terminal et le second terminal sont distincts, l'étape d'activation correspond, d'une part, à l'établissement direct, par le premier terminal, d'un lien de communication de voix avec le serveur vocal et, d'autre part, à l'établissement indirect, par le premier terminal, d'un lien de communication de données avec le serveur de données. Par « établissement direct », on entend l'initiation, par le premier terminal lui-même, d'une communication sur un lien de communication. Par « établissement indirect », on entend l'envoi, par le premier terminal, d'une requête d'établissement direct d'une communication, sur un lien de communication, par le serveur de données ou le second terminal.

Par le terme « automatique », on entend que l'utilisateur n'a pas besoin d'activer successivement le lien de communication de voix et le lien de communication de données manuellement. En d'autres termes, chacun des liens de communication est activé subséquemment à l'étape d'obtention d'une adresse de connexion à un serveur de données. Ainsi, par exemple, si l'utilisateur compose un numéro d'appel téléphonique vers un serveur vocal, le procédé selon l'invention permettra l'activation automatique d'un lien de communication de voix entre le premier terminal et le serveur vocal et d'un lien de communication de données entre le second terminal et un serveur de données de sorte à autoriser une communication de voix avec le serveur vocal et une communication de données avec le serveur simultanément.

L'activation d'un lien de communication de voix et d'un lien de communication de données permet de communiquer concomitamment sur les deux liens, c'est-à-dire de façon multimodale, un mode correspondant ici à un type de lien de communication.

L'utilisation d'un service mettant en œuvre le procédé selon l'invention est très simple pour un utilisateur qui n'a qu'à composer un numéro d'appel téléphonique pour pouvoir à la fois interagir sur un lien de communication de voix et échanger des données sur un lien de communication de données. Par le terme « échanger des données », on entend ici recevoir et/ou envoyer des données sur un lien de communication.

Selon un aspect l'étape d'obtention comprend une association du numéro d'appel composé à une adresse de connexion à un serveur de données. Une telle association permet de réaliser l'étape d'activation automatique uniquement lorsqu'un numéro d'appel est associé à une adresse de connexion à un serveur de données du réseau de télécommunications. En effet, dans le cas contraire, par exemple, lorsque le numéro d'appel composé ne correspond pas à un numéro d'appel vers un serveur vocal associé à une adresse de connexion, alors l'association ne permettra pas d'associer le numéro d'appel composé à une adresse de connexion et les étapes d'obtention et d'activation ne seront alors pas réalisées.

Dans un mode de réalisation le procédé comprend :
- l'obtention d'une pluralité d'adresses de connexion à une pluralité de serveurs de données du réseau de télécommunications, lesdites adresses de connexion étant associées au numéro d'appel composé, et,
- l'activation automatique d'un lien de communication de voix entre le premier terminal et le serveur vocal à partir du numéro d'appel composé et d'une pluralité de liens de communication de données entre au moins un second terminal et la pluralité de serveur de données à partir de la pluralité d'adresses de connexion obtenues de sorte à pouvoir communiquer simultanément sur lesdits liens.

Dans un mode de réalisation le procédé comprend la mise en œuvre par un serveur de synchronisation dans un réseau de télécommunications comprenant en outre un serveur vocal et un serveur de données, ledit procédé étant innovant en ce qu'il comprend une étape de synchronisation d'au moins une information vocale, échangée par le serveur vocal, avec au moins une donnée, stockée ou échangée par le serveur de données.

Par « synchronisation », on entend l'envoi, par le serveur vocal, d'au moins une information vocale, subséquemment à la réception ou au stockage, par le serveur de données, d'au moins une donnée associée, ou bien, l'envoi, par le serveur de données, d'au moins une donnée, subséquemment à la réception, par le serveur vocal, d'au moins une information vocale associée.

Une telle étape de synchronisation permet de communiquer des informations associées entre elles, différentes ou non, à la fois sur un lien de communication de voix et sur un lien de communication de données. En d'autres termes, une telle étape de synchronisation permet l'interaction simultanée d'un utilisateur sur une pluralité de modes, c'est-à-dire de types de lien de communications. Un utilisateur peut ainsi, par exemple, effectuer des choix sur un lien de communication de voix avec un serveur vocal interactif tout en échangeant des données, relatives aux choix effectués, sur le lien de communication de données.

Avantageusement, l'étape de synchronisation comprend l'envoi, par le serveur de synchronisation, d'une instruction au serveur vocal, conséquemment à la réception d'un évènement de donnée, reçu du serveur de données subséquemment à la réception, par le serveur de données, d'au moins une donnée, de sorte à permettre l'envoi, par le serveur vocal, d'au moins une information vocale associée.

Avantageusement encore, l'étape de synchronisation comprend l'envoi, par le serveur de synchronisation, d'une instruction au serveur de données, conséquemment à la réception d'un évènement vocal, reçu du serveur vocal subséquemment à la réception, par le serveur vocal, d'au moins une information vocale, de sorte à permettre l'envoi, par le serveur de données, d'au moins une donnée associée.

L'invention concerne aussi un terminal de communication selon la revendication 6, sur une pluralité de liens de communication dans un réseau de télécommunications, à partir d'un numéro d'appel, comprenant
- un module d'interception d'un numéro d'appel vers un serveur vocal, composé depuis le, premier, terminal,
- un module d'obtention d'une adresse de connexion à un serveur de données du réseau de télécommunications, ladite adresse de connexion étant associée au numéro d'appel composé, et,
- un module d'activation automatique d'un lien de communication de voix, entre le premier terminal et le serveur vocal, à partir du numéro d'appel composé, et d'un lien de communication de données, entre un second terminal et le serveur de données, à partir de l'adresse de connexion obtenue, de sorte à pouvoir communiquer simultanément sur lesdits liens.

Le premier et le second terminal peuvent être confondus en un même terminal unique. Ainsi, dans le cas d'un même terminal, celui-ci est agencé pour établir une connexion et communiquer simultanément, d'une part, sur un lien de communication de voix avec le serveur vocal, et, d'autre part, sur un lien de communication de données avec le serveur de données. Un tel terminal peut être, par exemple, un téléphone mobile de type smartphone, un tel smartphone étant apte à communiquer sur des liens de communication de types différents, tels que voix et données.

Dans le cas de deux terminaux distincts, le premier terminal est agencé pour établir une connexion et communiquer, avec le serveur vocal, sur un lien de communication de voix, et le second terminal est agencé pour établir une connexion et communiquer, avec le serveur de données, sur un lien de communication de données. Dans ce cas, par exemple, le premier terminal peut être un téléphone fixe ou mobile, par exemple n'étant apte qu'à établir une connexion et communiquer sur un lien de communication de voix, et le second terminal peut être un terminal TV, par exemple, n'étant apte qu'à établir une connexion et communiquer sur un lien de communication de données, du type internet.

L'invention concerne aussi un système de communication sur une pluralité de liens de communication dans un réseau de télécommunications, selon les revendications 7-10.

L'invention concerne aussi un programme d'ordinateur comportant des instructions pour la mise en œuvre, par un premier terminal, d'un procédé tel que défini ci-dessus lorsque ce programme est exécuté par un processeur.

L'invention concerne aussi un programme d'ordinateur selon la revendication 11, comportant des instructions pour la mise en œuvre, par un serveur de synchronisation, d'un procédé tel que défini ci-dessus lorsque ce programme est exécuté par un processeur.

D'autres caractéristiques et avantages de l'invention apparaîtront lors de la description qui suit faite en regard des figures annexées données à titre d'exemples non limitatifs et dans lesquelles des références identiques sont données à des objets semblables.
La figure 1 représente schématiquement le système de télécommunications selon l'invention.
La figure 2 représente schématiquement le premier terminal selon l'invention.
La figure 3 illustre le procédé, mis en œuvre par le système, selon l'invention.

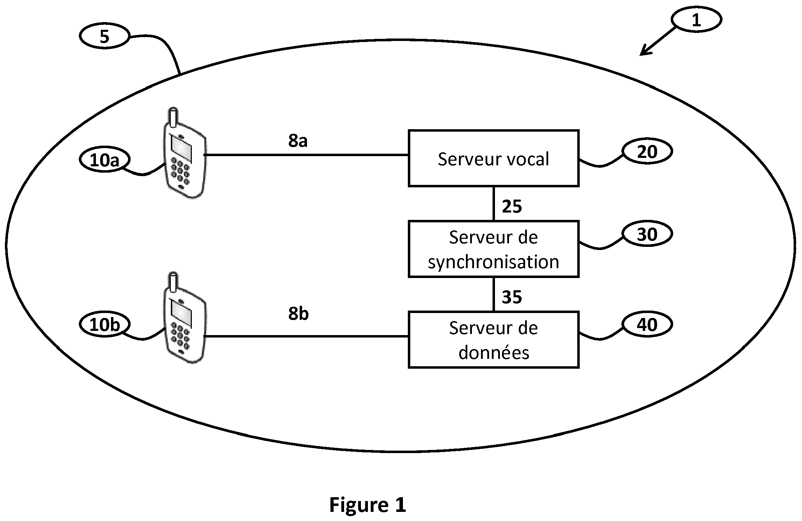

Dans la forme de réalisation du système de télécommunications selon l'invention, illustré par la figure 1, le système 1 comprend un réseau 5 de télécommunications, un premier terminal 10a, un second terminal 10b, un serveur vocal 20, un serveur de synchronisation 30, un serveur de données 40.

Le réseau 5 de télécommunications comprend une pluralité de liens de communication agencée pour autoriser les communications entre les terminaux 10a, 10b et les serveurs 20, 40 du réseau. Un lien de communication peut être, notamment, un lien de communication de voix 8a, agencé pour autoriser une communication entre le premier terminal 10a et le serveur vocal 20, ou un lien de communication de données 8b, agencé pour autoriser une communication entre le second terminal 10b et le serveur 40.

Le serveur vocal 20 est couplé au serveur de synchronisation 30 par un lien de communication 25 et le serveur de données 40 est couplé au serveur de synchronisation 30 par un lien de communication 35.

Le serveur vocal 20 peut être, par exemple, un serveur vocal interactif. Le serveur vocal 20 est configuré pour échanger, d'une part, des informations vocales avec le premier terminal 10a sur le lien de communication de voix 8a et, d'autre part, pour recevoir des instructions du serveur de synchronisation 30 et envoyer des évènements vocaux vers le serveur de synchronisation 30, sur le lien de communication 25. Un évènement vocal comprend un message associé à une information vocale donnée.

Le serveur de données 40 peut être, par exemple, un serveur Web. Le serveur de données 40 est configuré pour échanger, d'une part, des données avec le second terminal 10b sur le lien de communication de données 8b, et d'autres part, pour recevoir des instructions du serveur de synchronisation 30 ou envoyer des évènements de données vers le serveur de synchronisation 30, sur le lien de communication 35. Un évènement de donnée comprend un message associé à une donnée définie ou donnée.

Le serveur de synchronisation 30 comprend un module de synchronisation d'au moins une information vocale, échangée par le serveur vocal, avec au moins une donnée, stockée ou échangée par le serveur de données. Le serveur de synchronisation 30 est configuré pour recevoir, d'une part, des évènements vocaux du serveur vocal 20 sur le lien de communication 25 et, d'autre part, des évènements de données du serveur de données 40 sur le lien de communication 35. En outre, le serveur de synchronisation 30 est configuré pour envoyer des instructions au serveur vocal 20 et au serveur de données 40 sur, respectivement, les liens de communications 25 et 35. Le serveur de synchronisation 30 comprend une logique de traitement des événements, appelée machine à changement d'état, permettant d'associer un évènement vocal à une donnée et un évènement de données à une information vocale, c'est-à-dire de synchroniser une information vocale avec une donnée et vice-versa.

Une communication sur un lien de communication 8a, 8b correspond à une session qui peut être associée à un identifiant. Ainsi lorsque un lien de communication de voix 8a et un lien de communication de données 8b sont activés par un terminal 10a, ils peuvent correspondre à un même identifiant de session. Dans ce cas, le serveur de synchronisation 30 peut être configuré pour associer un évènement reçu à une information vocale ou à une donnée par identité des identifiants de sessions.

En pratique, le serveur vocal 20, le serveur de données 30 et le serveur de synchronisation 40 peuvent être distincts ou confondus en un même serveur unique. En d'autres termes, les serveurs 20, 30, 40 peuvent être physiquement distincts ou bien les fonctions remplies par chacun des serveurs 20, 30, 40 peuvent être regroupées sur un ou plusieurs serveurs physiques. Lorsque les serveurs sont distincts, les liens 25 et 35 peuvent être des liens 8 du réseau 5 de télécommunications.

Le terminal 10a est configuré pour établir une communication et communiquer, sur le lien de communication de voix 8a, c'est-à-dire ici échanger des informations vocales, avec le serveur vocal 20. Le terminal 10b est configuré pour établir une communication et communiquer, sur le lien de communication de données 8b, c'est-à-dire ici échanger des données, avec le serveur de données 40.

Les informations vocales peuvent comprendre uniquement de la voix ou bien comprendre, en plus de la voix, des signaux Dual-Tone Multi-Frequency (DTMF), envoyés par actionnement des touches du premier terminal 10a.

Les informations vocales peuvent être échangées en utilisant, par exemple, un protocole de VoIP, ou tout autre protocole de communication de voix, par exemple, défini par les normes telles que Global System for Mobile communications (GSM), Universal Mobile Telecommunications System (UMTS), etc.

La communication sur le lien de communication de données 8b peut consister en l'échange de données telles que, par exemple, des messages, des requêtes, des données du type Web etc.

Dans le système illustré par la figure 1, le premier terminal 10a et le second terminal 10b sont des terminaux mobiles, par exemple, de type smartphone.

Plus généralement, dans le système selon l'invention, le premier terminal 10a et le second terminal 10b peuvent être, outre un terminal mobile, un téléphone fixe, par exemple du type Réseau Téléphonique Commuté (RTC), un ordinateur portable ou laptop, un ordinateur personnel ou Personal Computer (PC) de type tablette PC ou bien PC fixe, etc.

Dans une forme de réalisation du système selon l'invention, le premier terminal 10a et le second terminal 10b sont confondus en un même terminal unique. Ainsi, dans le cas d'un même terminal, celui-ci est agencé pour établir une connexion et communiquer simultanément, d'une part, sur le lien de communication de voix 8a avec le serveur vocal 20 et, d'autre part, sur le lien de communication de données 8b avec le serveur de données 40. Un tel terminal peut être, par exemple, un téléphone mobile de type smartphone, un tel smartphone étant apte à communiquer sur des liens de communication de types différents tels que voix et données.

Dans une forme alternative de réalisation du système selon l'invention, illustrée par la figure 1, le premier terminal 10a et le second terminal 10b sont distincts. Le premier terminal 10a est configuré pour établir une connexion et communiquer, avec le serveur vocal 20, sur le lien de communication de voix 8a et le second terminal 10b est configuré pour établir une connexion et communiquer, avec le serveur de données 40, sur le lien de communication de données 8b. Dans ce cas, par exemple, le premier terminal 10a peut être un téléphone fixe du type RTC et le second terminal 10b peut être un terminal TV configuré pour recevoir des données sur un lien de type internet.

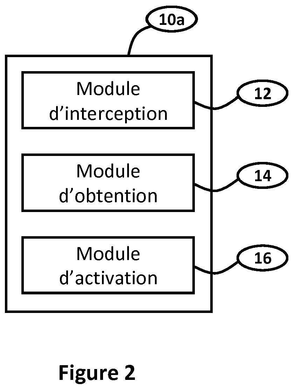

Le premier terminal 10a, illustré par la figure 2, comprend un module 12 d'interception, un module 14 d'obtention et un module 16 d'activation.

Le module 12 d'interception permet d'intercepter un numéro d'appel vers le serveur vocal 20, composé depuis le premier terminal 10a.

Le module 14 d'obtention permet d'obtenir une adresse de connexion, au serveur de données 40, associée à un numéro d'appel composé depuis le premier terminal 10a.

L'adresse de connexion au serveur de données 40 peut être stockée sur le premier terminal 10a, par exemple, dans une base de données, non représentée. Dans ce cas, le module 14 d'obtention est configuré pour associer un numéro d'appel à une adresse de connexion dans la base de données. L'adresse de connexion au serveur de données 40 peut aussi être reçue, par le premier terminal 10a, d'une autre entité du réseau 5 de télécommunications. Ainsi, par exemple, lorsque le premier terminal 10a et le second terminal 10b sont confondus en un même terminal unique, le terminal 10a/10b peut envoyer une requête à un serveur du réseau 5 de télécommunications, pouvant être l'un de serveurs 20, 30, 40, qui envoie en retour, au terminal 10a/10b, une adresse de connexion au serveur de données 40, associée au numéro d'appel composé depuis le terminal 10a/10b.

Le module 16 d'activation permet d'établir automatiquement, d'une part, un lien de communication de voix 8a, entre le premier terminal 10a et le serveur vocal 20, à partir du numéro d'appel composé, et, d'autre part, un lien de communication de données 8b, entre le second terminal 10b et le serveur de données 40, à partir de l'adresse de connexion obtenue de sorte à autoriser les deux communications, sur les liens 8a et 8b, simultanément.

Le serveur de synchronisation 30 comprend un module de synchronisation d'au moins une information vocale, échangée entre le premier terminal 10a et le serveur vocal 20, avec au moins une donnée, stockée par le serveur de données 40 ou échangée entre le second terminal 10b et le serveur de données 40.

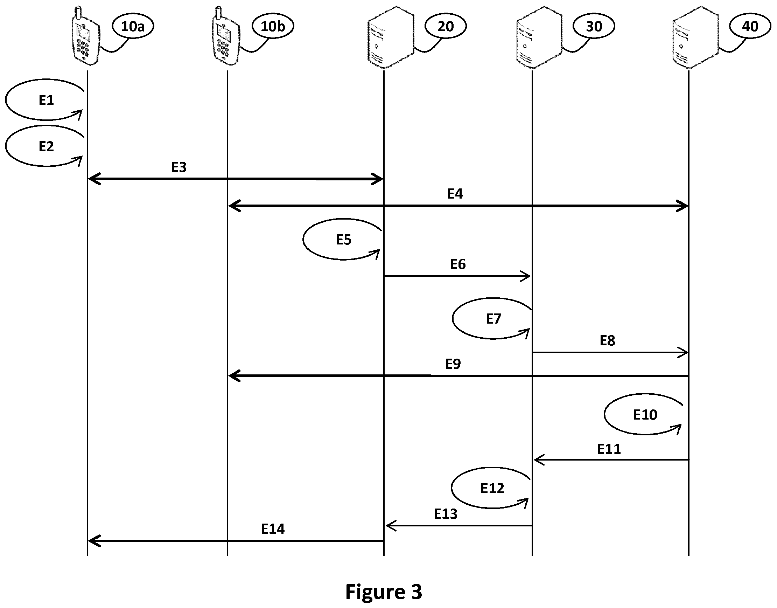

Le procédé selon l'invention va maintenant être décrit en référence à la figure 3.

Dans une étape E1, le premier terminal 10a intercepte un numéro d'appel vers le serveur vocal 20, composé depuis le premier terminal 10a.

Le premier terminal obtient ensuite, dans une étape E2, une adresse de connexion au serveur de données 40 du réseau 5 de télécommunications, cette adresse de connexion étant associée au numéro d'appel composé à l'étape E1. L'étape E2 peut comprendre l'association du numéro d'appel composé à l'adresse de connexion.

Ensuite, le premier terminal 10a active automatiquement, d'une part, dans une étape E3, une communication, sur un lien de communication de voix 8a, avec le serveur vocal 20, à partir du numéro d'appel composé, et, d'autre part, dans une étape E4, une communication, sur un lien de communication de données 8b, entre le second terminal 10b et le serveur de données 40, à partir de l'adresse de connexion obtenue de sorte à pouvoir communiquer simultanément sur les liens 8a et 8b.

Lorsque le premier terminal 10a et le second terminal 10b sont confondus en un même terminal unique, le terminal 10a/10b établit lui-même les deux communications.

Lorsque le premier terminal 10a et le second terminal 10b sont distincts, l'activation par le premier terminal 10a de la communication sur le lien de communication de données 8b peut être réalisée par le serveur de données 40 ou par le second terminal 10b, par exemple, manuellement ou sur requête du premier terminal 10a.

Une fois la communication, entre le premier terminal 10a et le serveur vocal 20, sur le lien de communication de voix 8a, et la communication, entre le second terminal 10b et le serveur de données 40, sur le lien de communication de données 8b, établies, le premier terminal 10a peut échanger des informations vocales avec le serveur vocal 20 et le second terminal peut échanger des données avec le serveur de données 40.

Pour chaque information vocale reçue du premier terminal 10a, le serveur vocal 20 détermine, dans une étape E5, si un évènement vocal associé doit être envoyé au serveur de synchronisation 30. Le serveur vocal 20 est ainsi configuré pour réaliser une correspondance entre les informations vocales échangées avec le premier terminal 10a et un évènement vocal à envoyer au serveur de synchronisation 30.

Lorsque le serveur de synchronisation 30 reçoit, dans une étape E6, du serveur vocal 20, un évènement vocal, sa logique de traitement détermine, dans une étape E7, si celui-ci est associé avec une donnée, c'est-à-dire s'il existe une correspondance entre l'évènement reçu et une donnée. L'évènement vocal peut comprendre l'identifiant de la session sur laquelle l'information vocale correspondante a été échangée de sorte à permettre au serveur de synchronisation 30 d'associer l'évènement vocal à une donnée d'une session ayant le même identifiant.

Lorsque l'évènement vocal reçu, par le serveur de synchronisation 30, est associé avec une donnée, le serveur de synchronisation 30 envoie, dans une étape E8, une instruction au serveur de données 40 pour que celui-ci envoie la donnée associée, dans une étape E9, au second terminal 10b. Une telle instruction peut comprendre, par exemple, le type d'évènement vocal, une catégorie de donnée associée à l'évènement vocal reçu etc. Une telle instruction peut en outre comprendre un identifiant de session de sorte à envoyer la ou les données sur la session correspondante activée sur le lien de communication de données 8b.

De même, pour chaque donnée reçue du second terminal 10b, le serveur de données 40 détermine, dans une étape E10, si un évènement de données associé doit être envoyé au serveur de synchronisation 30. Le serveur de données 40 est ainsi configuré pour réaliser une correspondance entre les données échangées avec le second terminal 10a ou des données stockées sur le serveur de données 30 et un évènement de données à envoyer au serveur de synchronisation 30.

Lorsque le serveur de synchronisation 30 reçoit, dans une étape E11, du serveur de données 40, un évènement de données, sa logique de traitement détermine, dans une étape E12, si celui-ci est associé avec une information vocale, c'est-à-dire s'il existe une correspondance entre l'évènement reçu et une information vocale. L'évènement de données peut comprendre l'identifiant de la session sur laquelle la donnée correspondante a été échangée ou est associée, de sorte à permettre au serveur de synchronisation 30 d'associer l'évènement de données à une information vocale d'une session ayant le même identifiant.

Lorsque l'évènement de donnée reçu, par le serveur de synchronisation 30, est associé avec une information vocale, le serveur de synchronisation 30 envoie, dans une étape E13, une instruction au serveur vocal 20 pour que celui-ci envoie l'information vocale associée, dans une étape E14, au second terminal 10b. Une telle instruction peut comprendre, par exemple, le type d'évènement de données, une catégorie d'information vocale associée à l'évènement de données reçu etc. Une telle instruction peut en outre comprendre un identifiant de session de sorte à envoyer la ou les informations vocales sur la session correspondante activée sur le lien de communication de voix 8a.

Ainsi, l'association d'un évènement vocal à une donnée ou d'un évènement de donnée à une information vocale permet ainsi au serveur de synchronisation 30 de synchroniser au moins une information vocale, échangée entre le premier terminal 10a et le serveur vocal 20, avec au moins une donnée, stockée par le serveur de données 40 ou échangée entre le second terminal 10b et le serveur de données 40.

Sur le mode de réalisation illustré par la figure 3, les étapes E5 à E9 sont réalisées avant les étapes E10 à E14. Cependant, dans le procédé selon l'invention, les étapes E5 à E9, d'une part, et E10 à E14, d'autre part, peuvent être réalisées concomitamment ou bien encore, les étapes E10 à E14 peuvent être réalisées avant les étapes E5 à E9.

Une information vocale peut être associée à une pluralité de données. De même, une donnée peut être associée à une pluralité d'informations vocales.

Une pluralité de liens de communication de données 8b peuvent être activés entre le second terminal 10b et le serveur de données 40 ou une pluralité de serveurs de données 40.

Un exemple d'application de l'invention concerne un service appelé kiosque vocal. Un kiosque vocal permet à un utilisateur de faire des choix vocaux ou par DTMF pour naviguer dans des menus afin d'obtenir une ou plusieurs informations.

Par exemple, pour un kiosque vocal d'information sportive, le serveur vocal peut proposer à l'utilisateur de sélectionner vocalement un sport, tel que le football, le rugby ou autre, en prononçant le nom du sport.

L'utilisateur prononce le mot « football » et le menu correspondant au football s'affiche alors sur l'écran de son smartphone. Le menu comprend l'actualité du football, les résultats des derniers matchs du championnat et le classement des équipes du championnat.

L'utilisateur peut alors soit prononcer les mots actualité, résultats ou classement ou bien sélectionner sur son smartphone la touche du menu correspondant à l'actualité, ou bien celle correspondant aux résultats ou bien encore celle correspondant au classement, pour obtenir l'un de ces choix.

Ainsi, dans cet exemple, s'il prononce le mot « classement », l'utilisateur verra apparaître le classement sur l'écran de son smartphone.

## Revendications

1. Procédé de communication sur une pluralité de liens de communication (8a, 8b) dans un réseau (5) de télécommunications, à partir d'un numéro d'appel, comprenant les étapes suivantes mises en œuvre par au moins un premier terminal (10a) :
- interception d'un numéro d'appel, vers un serveur vocal (20), composé depuis le premier terminal (10a),
- obtention d'une adresse de connexion à un serveur de données (40) du réseau (5) de télécommunications, ladite adresse de connexion étant associée au numéro d'appel composé, et,
- activation automatique d'un lien de communication de voix (8a) entre le premier terminal (10a) et le serveur vocal (20) à partir du numéro d'appel composé et d'un lien de communication de données (8b) entre un second terminal (10b) et le serveur de données (40) à partir de l'adresse de connexion obtenue de sorte à pouvoir communiquer simultanément sur lesdits liens (8a, 8b).

2. Procédé selon la revendication 1, dans lequel l'étape d'obtention comprend une association du numéro d'appel composé à une adresse de connexion à un serveur de données (40).

3. Procédé selon l'une des revendications précédentes, comprenant la mise en œuvre par un serveur de synchronisation (30) d'une étape de synchronisation d'au moins une information vocale, échangée par le serveur vocal (20), avec au moins une donnée, stockée ou échangée par le serveur de données (40).

4. Procédé selon la revendication 3, dans lequel l'étape de synchronisation comprend l'envoi, par le serveur de synchronisation (30), d'une instruction, au serveur vocal (20), conséquemment à la réception d'un évènement de donnée, reçu du serveur de données (40) subséquemment à la réception, par le serveur de données (40), d'au moins une donnée, de sorte à permettre l'envoi, par le serveur vocal (20), d'au moins une information vocale associée.

5. Procédé selon l'une des revendications 3 et 4, dans lequel l'étape de synchronisation comprend l'envoi, par le serveur de synchronisation (30), d'une instruction, au serveur de données (30), conséquemment à la réception d'un évènement vocal, reçu du serveur vocal (20) subséquemment à la réception, par le serveur vocal (20), d'au moins une information vocale, de sorte à permettre l'envoi, par le serveur de données (40), d'au moins une donnée associée.

6. Terminal de communication, sur une pluralité de liens de communication (8a, 8b) dans un réseau (5) de télécommunications, à partir d'un numéro d'appel, comprenant:
- un module (12) d'interception d'un numéro d'appel vers un serveur vocal (20), composé depuis le, premier, terminal (10a),
- un module (14) d'obtention d'une adresse de connexion à un serveur de données (40) du réseau (5) de télécommunications, ladite adresse de connexion étant associée au numéro d'appel composé, et,
- un module (16) d'activation automatique d'un lien de communication de voix (8a), entre le premier terminal (10a) et le serveur vocal (20), à partir du numéro d'appel composé, et d'un lien de communication de données (8b), entre un second terminal (10b) et le serveur de données (40), à partir de l'adresse de connexion obtenue, de sorte à pouvoir communiquer simultanément sur lesdits liens (8a, 8b).

7. Système de communication sur une pluralité de liens de communication (8a, 8b) dans un réseau (5) de télécommunications, à partir d'un numéro d'appel, comprenant :
- un premier terminal (10a) selon la revendication 6,
- un serveur vocal (20) configuré pour recevoir le numéro d'appel,
- un serveur de données (40) ayant l'adresse de connexion associée au numéro d'appel.

8. Système selon la revendication 7, ledit système comprenant en outre un serveur de synchronisation (30) comprenant un module de synchronisation d'au moins une information vocale, échangée par le serveur vocal (20), avec au moins une donnée, stockée ou échangée par le serveur de données (40).

9. Système selon l'une des revendications 7 et 8, dans lequel le module (14) d'obtention du premier terminal (10a) peut, en outre, être configuré pour associer un numéro d'appel, composé depuis le premier terminal (10a), à une adresse de connexion au serveur de données (40).

10. Système selon l'une des revendications précédentes 7 à 9, dans lequel le premier terminal (10a) et le second terminal (10b) sont confondus en un même terminal unique.

11. Programme d'ordinateur comportant des instructions pour la mise en œuvre d'un procédé, selon l'une des revendications 1 à 5, lorsque ce programme est exécuté par un processeur.

## Patentansprüche

1. Verfahren zur Kommunikation auf mehreren Kommunikationsverbindungen (8a, 8b) in einem Telekommunikationsnetz (5) anhand einer Rufnummer, welches die folgenden Schritte umfasst, die von wenigstens einem ersten Endgerät (10a) ausgeführt werden:
- Abfangen einer zu einem Sprachserver (20) übertragenen Rufnummer, die an dem ersten Endgerät (10a) gewählt wurde,
- Gewinnung einer Verbindungsadresse zu einem Datenserver (40) des Telekommunikationsnetzes (5), wobei die Verbindungsadresse der gewählten Rufnummer zugeordnet ist, und
- automatische Aktivierung einer Sprachkommunikationsverbindung (8a) zwischen dem ersten Endgerät (10a) und dem Sprachserver (20) anhand der gewählten Rufnummer und einer Datenkommunikationsverbindung (8b) zwischen einem zweiten Endgerät (10b) und dem Datenserver (40) anhand der gewonnenen Verbindungsadresse, um gleichzeitig auf den Verbindungen (8a, 8b) kommunizieren zu können.

2. Verfahren nach Anspruch 1, wobei der Schritt der Gewinnung eine Zuordnung der gewählten Rufnummer zu einer Verbindungsadresse zu einem Datenserver (40) umfasst.

3. Verfahren nach einem der vorhergehenden Ansprüche, welches die Ausführung, durch einen Synchronisationsserver (30), eines Schrittes der Synchronisation wenigstens einer Sprachinformation, die durch den Sprachserver (20) ausgetauscht wird, mit wenigstens einem Datenelement, das durch den Datenserver (40) gespeichert oder ausgetauscht wird, umfasst.

4. Verfahren nach Anspruch 3, wobei der Schritt der Synchronisation das Senden, durch den Synchronisationsserver (30), einer Anweisung an den Sprachserver (20) aufgrund des Empfangs eines Datenereignisses umfasst, welches, im Anschluss an den Empfang wenigstens eines Datenelements durch den Datenserver (40), von dem Datenserver (40) kommend empfangen wird, um das Senden wenigstens einer zugeordneten Sprachinformation durch den Sprachserver (20) zu ermöglichen.

5. Verfahren nach einem der Ansprüche 3 und 4, wobei der Schritt der Synchronisation das Senden, durch den Synchronisationsserver (30), einer Anweisung an den Datenserver (30) aufgrund des Empfangs eines Sprachereignisses umfasst, welches, im Anschluss an den Empfang wenigstens einer Sprachinformation durch den Sprachserver (20), vom Sprachserver (20) kommend empfangen wird, um das Senden wenigstens eines zugeordneten Datenelements durch den Datenserver (40) zu ermöglichen.

6. Endgerät zur Kommunikation auf mehreren Kommunikationsverbindungen (8a, 8b) in einem Telekommunikationsnetz (5) anhand einer Rufnummer, welches umfasst:
- ein Modul (12) zum Abfangen einer zu einem Sprachserver (20) übertragenen Rufnummer, die an dem ersten Endgerät (10a) gewählt wurde,
- ein Modul (14) zur Gewinnung einer Verbindungsadresse zu einem Datenserver (40) des Telekommunikationsnetzes (5), wobei die Verbindungsadresse der gewählten Rufnummer zugeordnet ist, und
- ein Modul (16) zur automatischen Aktivierung einer Sprachkommunikationsverbindung (8a) zwischen dem ersten Endgerät (10a) und dem Sprachserver (20) anhand der gewählten Rufnummer und einer Datenkommunikationsverbindung (8b) zwischen einem zweiten Endgerät (10b) und dem Datenserver (40) anhand der gewonnenen Verbindungsadresse, um gleichzeitig auf den Verbindungen (8a, 8b) kommunizieren zu können.

7. System zur Kommunikation auf mehreren Kommunikationsverbindungen (8a, 8b) in einem Telekommunikationsnetz (5) anhand einer Rufnummer, welches umfasst:
- ein erstes Endgerät (10a) nach Anspruch 6,
- einen Sprachserver (20), der dafür ausgelegt ist, die Rufnummer zu empfangen,
- einen Datenserver (40), der die Verbindungsadresse hat, die der Rufnummer zugeordnet ist.

8. System nach Anspruch 7,
wobei das System außerdem einen Synchronisationsserver (30) umfasst, der ein Modul zur Synchronisation wenigstens einer Sprachinformation, die durch den Sprachserver (20) ausgetauscht wird, mit wenigstens einem Datenelement, das durch den Datenserver (40) gespeichert oder ausgetauscht wird, umfasst.

9. System nach einem der Ansprüche 7 und 8,
wobei das Gewinnungsmodul (14) des ersten Endgerätes (10a) außerdem dafür ausgelegt sein kann, eine Rufnummer, die am ersten Endgerät (10a) gewählt wurde, einer Verbindungsadresse zu dem Datenserver (40) zuzuordnen.

10. System nach einem der vorhergehenden Ansprüche 7 bis 9,
wobei das erste Endgerät (10a) und das zweite Endgerät (10b) ein und dasselbe Endgerät sind.

11. Computerprogramm, welches Anweisungen zur Durchführung eines Verfahrens nach einem der Ansprüche 1 bis 5, wenn dieses Programm von einem Prozessor ausgeführt wird, umfasst.

## Claims

1. Method for communicating over a plurality of communication links (8a, 8b) in a telecommunications network (5) on the basis of a telephone number, comprising the following steps implemented by at least one first terminal (10a):
- intercepting a telephone number directed at a voice server (20) and dialled from the first terminal (10a),
- obtaining a connection address for connection to a data server (40) of the telecommunications network (5), said connection address being associated with the dialled telephone number, and
- automatically activating a voice communication link (8a) between the first terminal (10a) and the voice server (20) on the basis of the dialled telephone number, and a data communication link (8b) between a second terminal (10b) and the data server (40) on the basis of the obtained connection address so as to be able to communicate simultaneously over said links (8a, 8b).

2. Method according to Claim 1, wherein the obtaining step comprises associating the dialled telephone number with a connection address for connection to a data server (40).

3. Method according to either one of the preceding claims, comprising a synchronization server (30) implementing a step of synchronizing at least one item of voice information, which is interchanged by the voice server (20), with at least one datum, which is stored or interchanged by the data server (40) .

4. Method according to Claim 3, wherein the synchronization step comprises the synchronization server (30) sending an instruction to the voice server (20) as a result of receiving a datum event, which has been received from the data server (40) subsequent to the data server (40) receiving at least one datum, so as to allow the voice server (20) to send at least one associated item of voice information.

5. Method according to either one of Claims 3 and 4, wherein the synchronization step comprises the synchronization server (30) sending an instruction to the data server (30) as a result of receiving a voice event, which has been received from the voice server (20) subsequent to the voice server (20) receiving at least one item of voice information, so as to allow the data server (40) to send at least one associated datum.

6. Terminal for communicating over a plurality of communication links (8a, 8b) in a telecommunications network (5) on the basis of a telephone number, comprising:
- a module (12) for intercepting a telephone number directed at a voice server (20) and dialled from the first terminal (10a),
- a module (14) for obtaining a connection address for connection to a data server (40) of the telecommunications network (5), said connection address being associated with the dialled telephone number, and
- a module (16) for automatically activating a voice communication link (8a) between the first terminal (10a) and the voice server (20) on the basis of the dialled telephone number, and a data communication link (8b) between a second terminal (10b) and the data server (40) on the basis of the obtained connection address so as to be able to communicate simultaneously over said links (8a, 8b).

7. System for communicating over a plurality of communication links (8a, 8b) in a telecommunications network (5) on the basis of a telephone number, comprising:
- a first terminal (10a) according to Claim 6,
- a voice server (20) configured to receive the telephone number,
- a data server (40) that has the connection address associated with the telephone number.

8. System according to Claim 7, said system further comprising a synchronization server (30) comprising a module for synchronizing at least one item of voice information, which is interchanged by the voice server (20), with at least one datum, which is stored or interchanged by the data server (40) .

9. System according to either one of Claims 7 and 8, wherein the obtaining module (14) of the first terminal (10a) may, in addition, be configured to associate a telephone number dialled from the first terminal (10a) with a connection address for connection to the data server (40).

10. System according to one of the preceding Claims 7 to 9, wherein the first terminal (10a) and the second terminal (10b) are merged into just one single terminal.

11. Computer program including instructions for implementing a method according to one of Claims 1 to 5 when this program is executed by a processor.
